# EUROPEAN PATENT APPLICATION

(11) **EP 2 503 679 A1**
(43) Date of publication of application: **26.09.2012**
(21) Application number: 11425077.2
(22) Date of filing: 25.03.2011
(51) Int. Cl.: H02K 49/10, H02K 53/00

(54) **Apparatus with permanent magnets**

(71) Applicant: Caccherano, Pierluigi, 10024 Moncalieri (Torino) (IT)
(72) Inventor: Caccherano, Pierluigi, 10024 Moncalieri (Torino) (IT)
(74) Representative: Carangelo, Pierluigi

(57) **Abstract**

An apparatus with permanent magnets (1) is described, which is adapted to be coupled with an actuation device (EM) and with a load to supply power to said load. The apparatus (1) comprises:
- a rotor (2) adapted to be coupled with said load and adapted to be rotatably supported to rotate around a rotor axis (Z_Z);
- at least one magnetic rotor element (6A), or magnetic rotor pole (6A), which is provided on the rotor and that comprises a permanent rotor magnet (7A) rotating rigid with the rotor (2);
- a transmission member (10) mountable to rotate independently with respect to the rotor (2) and which is adapted to be actuated through said actuation device (EM) to rotate about a transmission member axis (Y_Y); and
- an annular array of sliding members (15) distributed around the rotor axis (Z_Z), wherein each sliding member (15) comprises a sliding member permanent magnet (15A) and is mounted independently slidable along a respective sliding direction (S_m) transversal to the rotor axis (Z_Z) to carry out an alternate motion in the sliding direction (S_m), said sliding member magnets (15A) and said rotor magnet (7A) being mutually arranged so as to have magnetic poles of the same type (S) operatively opposing one another to generate repulsive magnetic forces between the sliding member permanent magnets (15A) and the permanent rotor magnet (7A).

The transmission member (10) comprises a transmission portion (16) that is adapted to cooperate with said sliding members (15) to consecutively bring each sliding member permanent magnet (15A) close to the permanent rotor magnet (7A) and in this way determine the rotation of the rotor (2) through the effect of the magnetic repulsion between each sliding member permanent magnet (15A) and said rotor magnet (7A).
The sliding members (15) are adapted to cooperate with the transmission portion (16) so as to transmit forces (F_t, F_r) to the transmission portion (16). The arrangement of the sliding members (15) and the transmission portion (16) are designed so that said forces (F_t, F_r) are adapted to at least partially compensate one another to reduce the mechanical moment transmitted by such forces (F_t, F_r) to the transmission member (10).

## Description

The present description concerns the technical field of apparatuses with permanent magnets and, more specifically, it concerns an apparatus with permanent magnets adapted to be respectively connected to an actuation device and to a load to supply power to the load.

Permanent magnets have for a long time been of great interest and are widely and commonly used in machines or apparatuses of various types suitable for supplying power to a load connected to them.

A permanent magnet can be considered *per sé* like a "clean" energy accumulator, if for no other reason than the amount of energy necessary to make it.

For a permanent magnet, a problem derives from how this energy accumulated in magnetic form can be extracted and transformed.

Currently the Applicant knows of no machines or apparatuses of the aforementioned type that are able to extract the energy intrinsically accumulated in magnetic form inside the magnetic field of permanent magnets.

However, by being able to provide machines or apparatuses of the aforementioned type that are able to at least partially extract such energy, substantial steps forward could be made in tackling problems linked for example to questions of energy and/or pollution, which are currently among the main problems in the world as a whole.

A particular purpose of the present description is to provide an apparatus with permanent magnets suitable for being connected to an actuation device and to a load to transmit a power to the load, in which such an apparatus is able to at least partially extract the energy accumulated in magnetic form in the magnetic field of permanent magnets.

In particular, a purpose of the present description is to provide an apparatus with permanent magnets suitable for being connected to an actuation device and to a load to transmit a power to the load, in which such an apparatus is suitable for providing, just for a limited time period, a power in output to the load that is greater than the power supplied in input to the actuation device.

A general purpose of the present invention, in addition or as an alternative with respect to the aforementioned purposes, is to provide an apparatus with permanent magnets suitable for being connected to an actuation device and to a load to transmit a power to the load, in which the apparatus is an alternative apparatus with respect to the apparatuses with permanent magnets of the prior art.

These and other purposes are achieved through an apparatus with permanent magnets as defined in claim 1 in its most general form, and in the claims dependent on it in some particular embodiments.

A further purpose of the present description is to provide a vehicle as defined in claim 12.

The invention will become clearer from the following detailed description of embodiments thereof, made as an example and therefore in no way limiting in relation to the attached drawings, in which:
- figure 1 is an almost frontal perspective view of an apparatus with permanent magnets according to a currently preferred embodiment mounted to a support frame;
- figure 2 is a perspective view in which the apparatus with permanent magnets of figure 1 is seen from the opposite side with respect to such a figure and in which some devices are shown coupled with the apparatus;
- figure 3 is a perspective view in which some components are represented assembled together of the apparatus of figure 1;
- figure 4 is a perspective view in which some components of the apparatus of figure 1 are partially represented;
- figure 5 is a plan view of a component of the apparatus of figure 1;
- figure 6 is a perspective view of a detail of the apparatus of figure 1, in which some elements of the apparatus have been modified with respect to the embodiment of figure 1 and in which the apparatus is represented in a first operative configuration;
- figure 7 is a perspective view analogous to figure 6, in which the apparatus is represented in a second operative configuration;
- figure 8 is a front plan view in which a constructive drawing of the component of figure 5 is shown; and
- figure 9 is a plan view in which some components of the apparatus of figure 1 are schematically represented in an operative configuration of the apparatus.

In the attached figures elements that are the same or similar will be indicated with the same reference numerals.

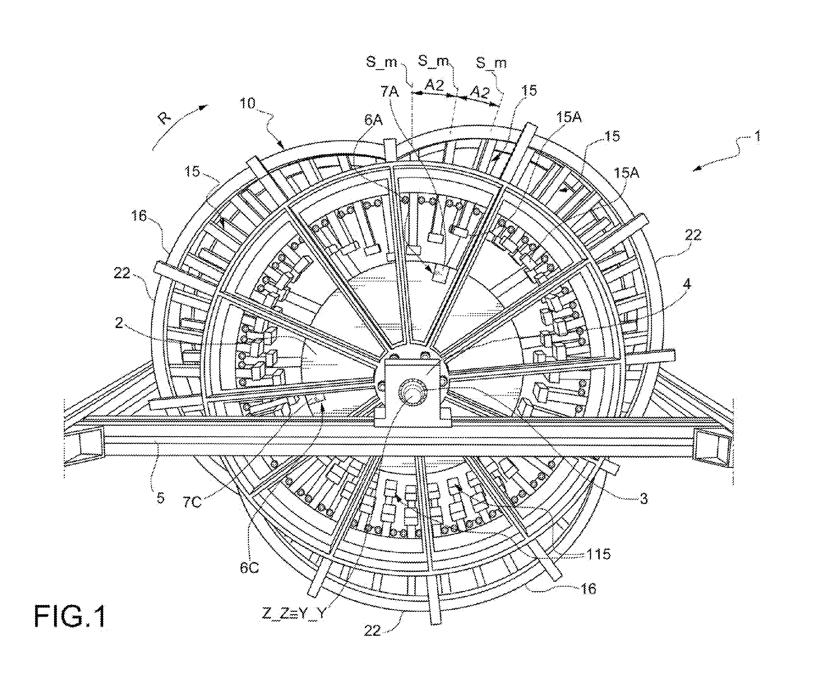

With reference to figure 1, an apparatus with permanent magnets according to a currently preferred embodiment has been generally indicated with 1.

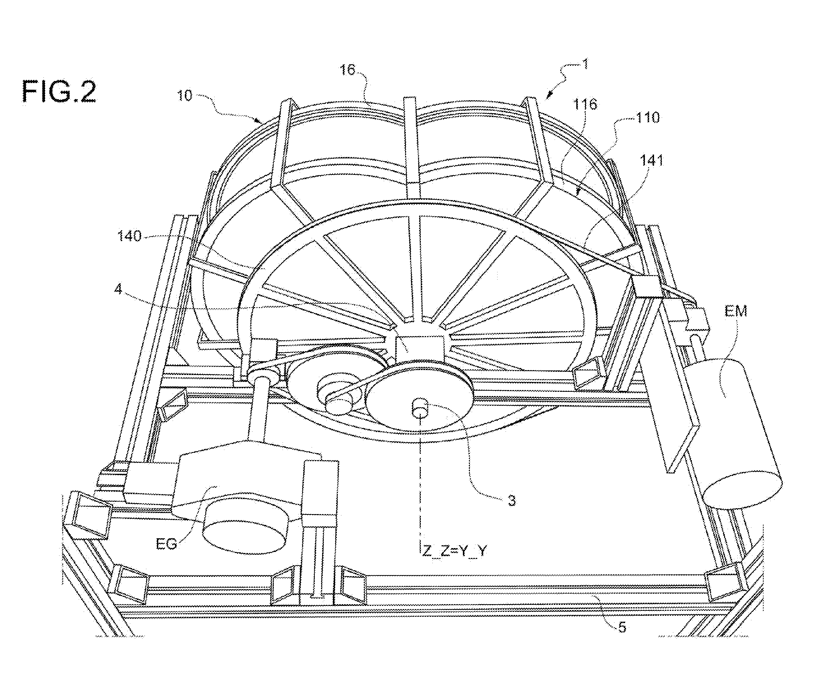

The apparatus 1 comprises a rotor 2 suitable for being rotatably supported to rotate around a rotor axis Z_Z (fig.2). Regarding this, it should be observed that in the present description and in the attached claims the terms axial, radial and tangential should be taken to refer to the rotor axis Z_Z.

The rotor 2 is preferably fitted onto a shaft 3 that is supported for the rotation around the rotor axis Z_Z through a pair of support bearings 4. Such bearings are mounted opposite one another and are fixed to a support frame 5.

The rotor 2 is provided with at least one magnetic rotor element 6A, or magnetic rotor pole 6A, which comprises at least one permanent rotor magnet 7A. The rotor magnet 7A is mounted so as to rotate rigid with the rotor 2.

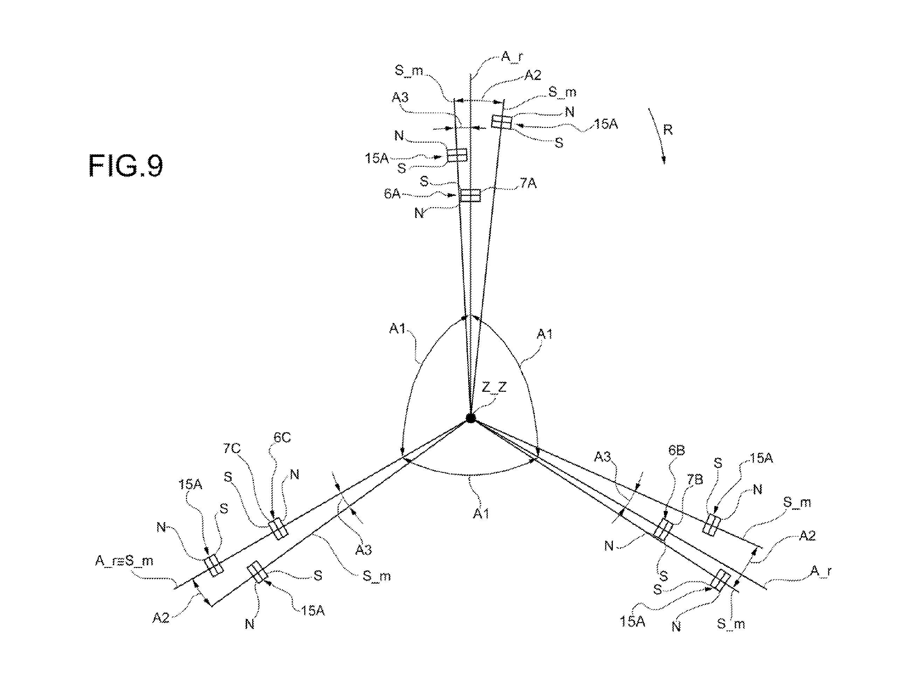

According to a preferred embodiment, the rotor 2 is provided with a plurality of magnetic rotor poles or rotor poles. In the example of figure 1 the rotor comprises three rotor poles 6A, 6B, 6C (fig. 9), only two rotor poles 6A, 6C of which are visible in such a figure. Each of such rotor poles comprises a respective permanent rotor magnet rotating rigid with the rotor 2. Figure 9 schematically represents three permanent rotor magnets 7A, 7B, 7C of the apparatus 1 of figure 1, each of which is associated with a respective rotor pole 6A, 6B, 6C. As can be observed in figure 9, the rotor poles 6A, 6B, 6C, and more specifically the rotor magnets 7A, 7B, 7C, are uniformly angularly spaced apart about the rotor axis Z_Z. In the example of figures 1 and 9, the rotor magnets 7A, 7B, 7C are uniformly angularly spaced apart by angles A1 equal to 120° about the rotor axis. More specifically, the rotor magnets 7A, 7B, 7C in the example have the respective radial magnet axes A_r angularly spaced apart by 120° about the rotor axis z_z (in figure 9, such an axis is perpendicular to and comes out from the plane of the figure).

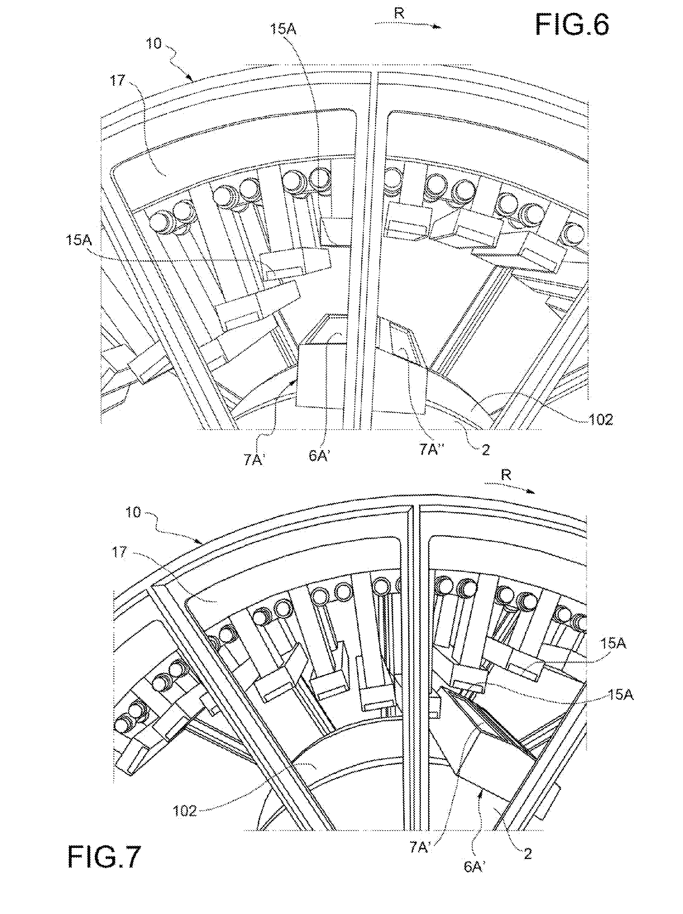

It should be observed that, in general, the apparatus 1 can also be equipped with a plurality of permanent magnets for each rotor pole, where such magnets are angularly spaced apart about the rotor axis. Regarding this, figures 6 and 7 represent an enlarged detail of the apparatus 1, in which it is possible to see a rotor pole 6A' having a slightly modified structure with respect to the rotor pole 6A of figure 1. In particular, in the example of figure 6, it is possible to see a rotor pole 6A' comprising three permanent rotor magnets (just two of which, 7A', 7A*''*, can be seen in figure 6) that are fixed to a support structure fixedly connected to the rotor 2. In the case in which the rotor 2 comprises a plurality of magnets for each rotor pole, it will be the first magnets of each of such pluralities, considering the direction of rotation R of the rotor 2, that are uniformly angularly spaced apart about the rotor axis. It should also be observed that each rotor pole can in general either comprise a support structure to which one or more magnets are fixed or else it can be formed from one or more permanent magnets directly fixed to the rotor 2.

Preferably, the rotor magnets 7A, 7B, 7C are fixed at a radially outer peripheral portion of the rotor 2.

Going back to figure 1, the apparatus 1 comprises a transmission member 10. The transmission member 10 is suitable for being mounted so as to be able to rotate independently with respect to the rotor 2 to rotate about a transmission member axis Y_Y that preferably coincides with the rotor axis Z_Z. In the example of figure 1, the transmission member 10 is in particular a cam 10 that is mounted coaxially with respect to the rotor 2 to rotate about the rotor axis Z_Z. However, according to an embodiment, the transmission member 10 could also be mounted so as to be able to independently rotate about a transmission member axis Y_Y that is different from the rotor axis. For example, the axis Y_Y could be an axis parallel to the rotor axis Z_Z.

The apparatus 1 comprises an annular array of sliding members 15, or cam followers 15, which are distributed around the rotor axis Z_Z. In the example of figure 1, such an annular array comprises in particular forty cam followers 15. In accordance with a further embodiment, the apparatus 1 can comprise a number of cam followers 15 other than forty. In general, for optimal operation of the apparatus 1 and to reduce the probability of situations of the apparatus stalling occurring, it is preferable however for the number of cam followers 15 to be greater than or equal to ten. According to an embodiment, the cam followers should preferably be at least ten for each rotor pole.

The cam followers 15 each comprise a respective sliding member permanent magnet 15A, or follower permanent magnet 15A. The follower magnets 15A in the example have the shape of rectangular plates. According to further embodiments, the follower magnets 15A could also be configured differently from rectangular plates. Such magnets should nevertheless in general have shapes that are as close to being the same as one another as possible.

The cam followers 15 are mounted so as to each be able to independently slide along a respective sliding direction S_m to carry out an alternate motion along such sliding directions S_m. The sliding directions S_m are directions transversal to the rotor axis Z_Z. In the example, the sliding directions S_m lie on a plane perpendicular to the rotor axis Z_Z.

The follower magnets 15A and the rotor magnets 7A, 7B, 7C are mutually arranged so as to have magnetic poles of the same type operatively opposing one another to generate repulsive magnetic forces between the follower magnets 15A and each rotor magnet 7A, 7B, 7C. The rotor magnets 7A, 7B, 7C and the follower magnets 15A are also separated from one another by an annular space.

In other words, with reference for example to figure 9, in which the rotor magnets 7A, 7B, 7C are schematically represented, each placed in front of a respective pair of follower magnets 15A which are adjacent to one another (i.e. angularly adjacent to one another, in other words immediately angularly consecutive and close to each other), it can be seen that the follower magnets 15A are arranged with the south pole S facing towards the rotor axis Z_Z whereas the rotor magnets 7A, 7B, 7C are arranged with the respective south poles S facing towards the south poles S of the follower magnets 15A. Alternatively, the rotor magnets 7A, 7B, 7C and the follower magnets 15A could be arranged so as to have the respective north poles N, instead of the south poles S, opposing one another.

Going back to figure 1, it can be seen that the transmission member 10, or cam 10, comprises a transmission portion 16, or cam profile 16. The profile 16 is in general a portion of the cam 10 that is suitable for cooperating with the cam followers 15 to determine the sliding of the latter along the respective sliding directions S_m. Preferably, the cam profile 16 is suitable for directly engaging the cam followers 15.

The cam followers 15 are suitable for cooperating with the cam profile 16 so as to transmit forces to the cam profile. In particular, the arrangement of the cam followers 15 and the configuration of the cam profile are advantageously designed or configured so that the forces transmitted by the cam followers to the cam are suitable for at least partially compensating one another to reduce the resulting mechanical moment, or the resulting torque, transmitted by such forces to the cam. By resulting moment, we mean in particular the moment transmitted overall by the annular array of cam followers 15 to the cam 10.

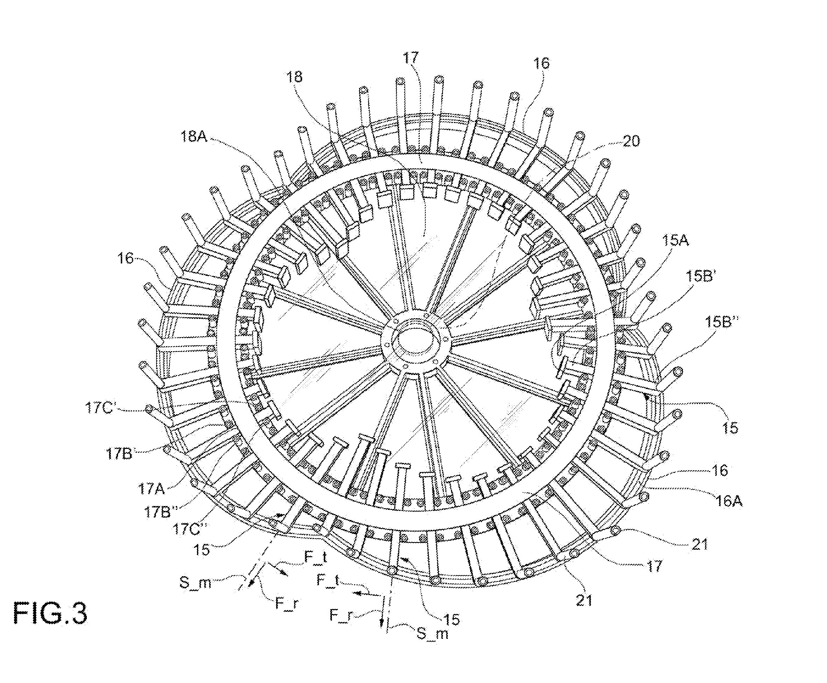

In figure 3, as an example the forces transmitted by two cam followers 15 are schematically represented. As can be observed, such forces can each be broken down into a radial component F_r and a tangential component F_t. The radial components F_r are absorbed by the cam. The tangential components F_t, which contribute to the aforementioned resulting mechanical moment on the cam, are directed in opposite directions to one another so that the respective mechanical moments with respect to the rotor axis Z_Z partially or completely compensate one another.

According to a particularly preferred embodiment, the arrangement of the cam followers 15 and the cam profile 16 are designed or configured so that the resulting mechanical moment of the aforementioned forces transmitted by the cam followers to the cam is equal to zero or substantially equal to zero.

In particular, as can be observed for example in figure 9, in which just some of the magnets 15A of the aforementioned array are represented for greater clarity of the figure, in the example the arrangement of the cam followers 15 is such that the sliding directions S_m are radial sliding directions with respect to the rotor axis Z_Z. Moreover, in the example the cam followers 15, and therefore the follower magnets 15A, are uniformly angularly spaced about the rotor axis Z_Z.

In the example, in order to determine the configuration of the cam profile 16, the forces transmitted by the cam followers to the cam have been considered in first approximation equal to the magnetic forces transmitted to the cam followers by the magnetic field generated by the follower magnets 15A and by the rotor magnets 7A, 7B, 7C. More specifically, such magnetic forces have been calculated estimating by computer the aforementioned magnetic field at a plurality of angular positions of the rotor 2. The general objective is to reduce as much as possible the resistant moment transmitted by the cam followers to the cam in the operating conditions of the apparatus 1.

According to a preferred embodiment, the sliding directions S_m of the follower magnets 15A are fixed sliding directions, in other words fixed sliding directions with respect to a fixed external reference, like for example the support frame 5. In other words, preferably the cam followers 15 each have a single degree of freedom.

It should be observed that according to an embodiment the sliding directions S_m could also not be radial directions. For example, such sliding directions could shift to a greater or lesser extent from the radial direction, for example so that each sliding direction S_m is tangent to the same virtual circumference centred on the rotor axis Z_Z and lying on a plane perpendicular to such an axis. It should be observed that, in general, the sliding directions S_m are preferably co-planar directions lying on a plane perpendicular to the rotor axis Z_Z.

In any case it is preferable for the angle A2 (figure 1 and 9) between the sliding directions S_m of each pair of angularly adjacent cam followers 15 to be the same.

In the example of figures 1 and 9, in which the sliding directions S_m are radial directions and in which the cam followers 15 are uniformly angularly distributed around the rotor axis Z_Z, the angle A2 between the sliding directions S_m of each pair of adjacent cam followers 15 is an angle of 9°.

It should be observed that for optimal operation of the apparatus 1, it is advantageous for the aforementioned angle A2 between two adjacent sliding directions S_m to be equal to a whole multiple of the number Np of rotor poles (in the example Np=3).

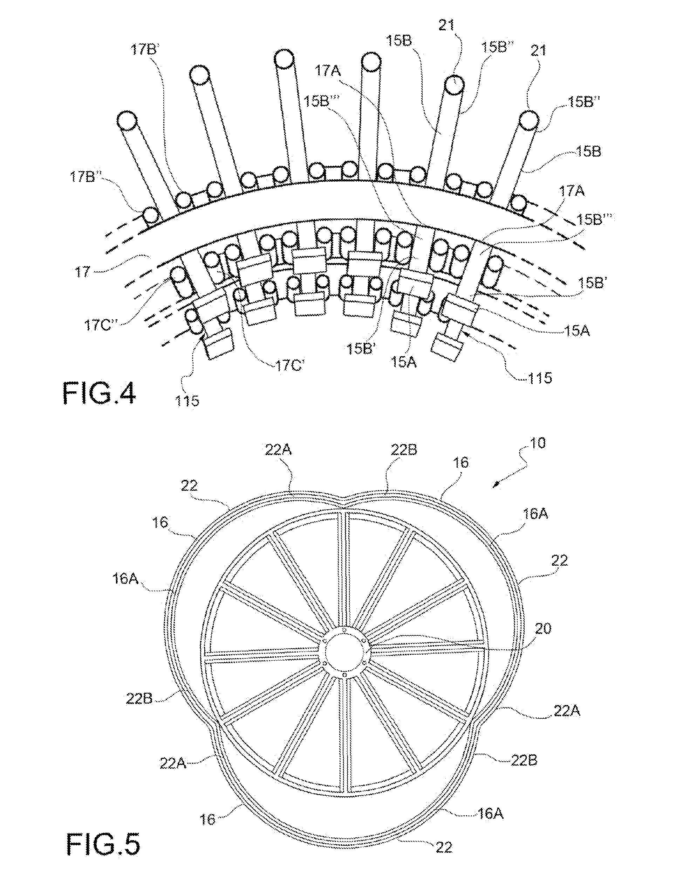

With reference to figures 3 and 4, according to a preferred embodiment, the cam followers 15 each comprise a support arm 15B to support a respective follower magnet 15A. Each support arm 15B has an arm end portion 15B' to which the respective follower magnet 15A is fixed, and an opposite arm end portion 15B*''* that is slidably constrained to the cam profile 16.

The support arms 15B are straight arms of the same length to support the magnets 15A at the same distance from the cam profile 16, where the distances of the magnets 15A from the cam profile are measured along the sliding directions S_m.

It should be observed that according to further embodiments, the cam followers could also be made in a different way from what is described above. For example, the cam followers 15 could consist of magnets 15A of suitable shape for cooperating directly with the cam profile 16 without the need to provide support arms 15B. However, such an embodiment would be less economically advantageous and would make it more complicated to manage the magnetic interaction between magnets 15A adjacent to one another.

Again with reference to figures 3 and 4, it should be observed that to guide the sliding of the cam followers 15 along the sliding directions S_m, the apparatus 1 is equipped with guide elements 17 suitable for cooperating with the support arms 15B.

According to an embodiment, the guide elements 17 comprise an annular member 17 (such a member is partially represented in figure 4) with which the support arms 15B are slidably coupled. In the example the annular member 17 is an essentially circular ring 17. The ring 17 is arranged between the cam profile 16 and the rotor 2 and it is equipped with a plurality of guide channels 17A each suitable for receiving a respective intermediate portion 15B*'''* of each support arm 15B.

In order to facilitate the sliding of the support arms 15B, the annular member 17 is preferably equipped with pairs of opposite rollers, 17B', 17B*''* and 17C', 17C*''* respectively, at each guide channel 17A. In particular, the rollers 17B', 17B", 17C*'*, 17C" are suitable for slidably engaging the intermediate portions 15B*'''* of the support arms 15B.

It should be observed that the ring 17 is a fixed member. Preferably, the ring 17 is fixed to the support frame 5 so as to be fixedly connected to the latter. For this purpose, the ring 17 can for example be fixed to a support wall 18, in the example made through a plate of transparent plexiglas®, which is arranged between the cam 10 and the ring 17. According to an embodiment the support wall 18 is intended to be fixed to an end flange of a sleeve portion (not represented in the figures) that is formed integrally with the support bearing 4.

The support wall 18 is also equipped with a through opening 18A, which is suitable for being aligned with the sleeve portion so that both the sleeve portion and the through opening 18A are suitable for being operatively passed through by the shaft 3.

In order to allow the rotation of the cam 10 independently from the support wall 18, the cam in the example is rotatably coupled with the aforementioned sleeve portion (not represented), through a respective hub 20.

Now with reference to figures 1, 2, 3 and 5, it can be seen that in the example the cam profile 16 is formed from a grooved annular portion 16 that extends around the rotor axis Z_Z. The grooved portion 16 is preferably provided at a peripheral portion of the cam 10 and comprises an annular groove 16A. The end portions 15B*''* of the support arms 15B are constrained to the grooved portion 16 through respective pins 21 slidably coupled with the groove 16A.

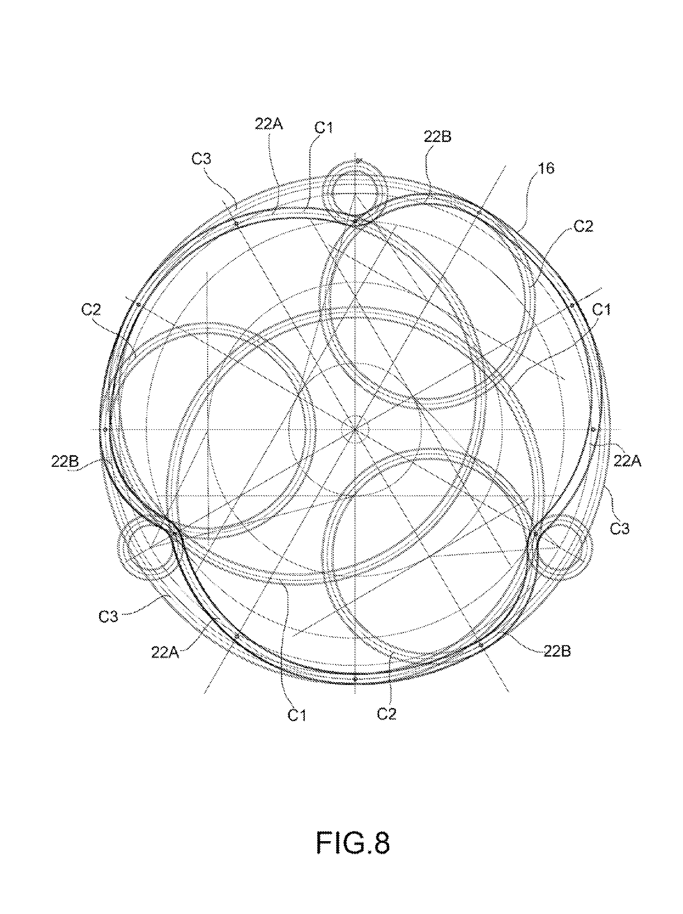

According to an embodiment, the cam profile 16 is a polylobed profile. In particular, with reference to figures 5 and 8, it can be observed that in the example the cam profile 16 has a plurality of lobes 22 joined together. The number of lobes 22 corresponds to the number Np of rotor poles of the rotor 2. In the example, the cam profile 16 comprises in particular three lobes 22.

With reference to figure 8, according to an advantageous embodiment aimed at further reducing the aforementioned mechanical moment on the cam, each lobe 22 of the cam profile comprises a lobe end portion 22A with a greater bending radius and an opposite lobe end portion 22B with a smaller bending radius. More specifically, the portion with greater bending radius 22A of each lobe is joined to the portion with smaller bending radius 22B of the adjacent lobe. This advantageously allows the intensity of the radial and tangential components F_r, F_t of the forces transmitted by the cam followers to the cam profile to be varied. Therefore, in this way it is possible to at least partially compensate for the fact that the cam followers 15 are subjected to forces of magnetic repulsion or magnetic pressure of different intensities.

In the example, the portions with greater bending radius 22A each correspond to an arc of a circumference C1 having a certain circumference radius, whereas the portions with smaller bending radius 22B each correspond to an arc of a circumference C2 having a relatively smaller circumference radius with respect to the radius of the circumference C1. In the example, the portions 22A, 22B of each lobe, are also joined together through a further arc of circumference belonging to a circumference C3 having a greater circumference radius with respect to those of the circumferences C1 and C2.

With reference to figure 1, it should be observed that in the example the cam profile 16 extends radially outwards with respect to the rotor 2.

However, according to further embodiments, the configuration and the relative arrangement of the cam profile 16, of the cam followers 15 and of the rotor 2 could also be different with respect to those represented in the attached figures. For example, the apparatus 1 could be made so that the rotor extends radially outside with respect to the cam profile. In this case, it would for example be possible to make a rotor having a generally annular shape, which is equipped on a respective radially inner surface with permanent rotor magnets facing towards the rotor axis Z_Z. The cam could in this case for example be made so as to have an annular cam profile that extends radially inside with respect to the rotor. Moreover, the cam profile 16 should be suitably shaped so as to allow the sliding of the cam followers towards the rotor magnets.

With reference to figures 1 and 4, it should be noted that in the example, to obtain better performance, the apparatus 1 comprises a further annular array of sliding members 115 or cam followers 115. More specifically, the apparatus 1 in the example comprises a first and a second group of components coupled together. The first group of components comprises the aforementioned array of cam followers 15, the ring 17 and the rotor 2. The second group of components comprises the further array of cam followers 115, a further ring 117 and a further rotor 102 (partially visible in figures 6 and 7) that are structurally and functionally identical, respectively, to the cam followers 15, to the ring 17 and to the rotor 2. In particular, the components of the second group are arranged each axially aligned with the corresponding component of the first group. In other words, the apparatus 1 in the example has an essentially modular structure. The rotor 2 and the further rotor 102 rotate rigid with each other. The further cam followers 115 are connected to the cam followers 15 through the pins 21.

In the example the apparatus 1 also comprises a further cam 110 (figure 2) having a cam profile 116 which is identical to the cam profile 16. The further cam 110 is suitable for cooperating with the further cam followers 115 in an analogous way to the cam 10 with the cam followers 15. The further cam is arranged opposite the cam 10 and is fixed to the latter so that the first and the second group of components are arranged between the two cams 10, 110. In other words, the cam 10 and the further cam are essentially suitable for operating as a single cam.

With reference to figure 2, in the example the further cam 116 is equipped with a coupling portion 140 suitable for allowing the coupling of such a cam with an actuation device EM, such as a motor. In the example, the actuation device is in particular an electric motor EM. Preferably, such a coupling portion 140 is connected to the shaft of the motor EM through a transmission belt 141.

Alternatively, for example in the case in which in the apparatus 1 the aforementioned second group of component were not also provided but just the first group, the coupling portion for coupling with the actuation motor could be provided directly on the cam 10 instead of on the cam 116.

In the example, the rotor 2 is coupled through the shaft 3 with an electric generator EG to supply electrical power in output to an electrical load (not represented) able to be coupled with the apparatus 1. Alternatively, the electric generator EG could not be provided and a mechanical load could for example be directly coupled with the shaft 3.

Having described the structure of the apparatus 1, we shall now describe an example of operation of such an apparatus. For the sake of simplicity of description, the operation will be described with reference just to the aforementioned first group of components, since the operation of the second group is identical to that of the first group.

Let us consider an initial balanced configuration of the apparatus 1, like for example the one illustrated in figure 1, in which the rotor 2 and the cam 10 are stopped and in which each of the rotor magnets 7A, 7B, 7C is angularly arranged between a first and a second magnet 15A that are adjacent to one another and it is arranged in front of such magnets a certain distance from them. In other words, each of the rotor magnets 7A, 7B, 7C takes up an initial configuration similar to that of the rotor magnet 7A in figure 9. Considering the direction of rotation R of the rotor 2 indicated in the figures, such first and second magnets respectively correspond, in other words, to a magnet 15A situated angularly immediately upstream and to a magnet 15A situated angularly immediately downstream with respect to the corresponding rotor magnet 7A, 7B, 7C. In particular, for the sake of brevity of description, it should be observed that henceforth the expressions "upstream" and "downstream" referring to one of the magnets 15A, should be taken, considering the direction of rotation R, as "angularly immediately upstream" and "angularly immediately downstream" with respect to a corresponding rotor magnet 7A, 7B, 7C arranged in front of the magnet 15A. In other words, with reference for example to figure 9, it can be observed that the rotor magnet 7A is angularly arranged between a magnet 15A upstream and a magnet 15A downstream.

For the sake of simplicity of description, the operation of the apparatus 1 is described hereafter by making initially reference to just the rotor magnet 7A and the aforementioned two magnets 15A upstream and downstream of the magnet 7A. The same considerations can, indeed, be repeated for each of the other rotor magnets 7B, 7C and the respective pairs of magnets 15A upstream and downstream.

Regarding this, as can be observed in figure 1, in the aforementioned initial configuration the magnet 15A upstream of the magnet 7A takes up a position relatively advanced towards the rotor magnet 7A along the respective sliding direction S_m. As can be observed in such a figure, the magnet 15A downstream of the magnet 7A, on the other hand, takes up a position relatively set back with respect to the rotor magnet 7A along the respective sliding direction S_m. In other words, in the example the upstream magnet is relatively closer to the rotor magnet 7A whereas the downstream magnet is relatively farther from the rotor magnet 7A. Again in other words, the upstream magnet is arranged radially more inside and the downstream magnet is arranged radially more outside with respect to the upstream magnet.

Such a relative arrangement between the rotor magnet 7A and the upstream and downstream magnets 15A is suitable for generating regions or volumes with different magnetic flux concentration inside the magnetic field generated overall by the magnets 15A of the aforementioned array.

More specifically, between the rotor magnet 7A and the corresponding upstream and downstream magnets 15A a first volume, or first bubble, with relatively greater magnetic pressure, and a second volume, or second bubble, with relatively lower magnetic pressure with respect to the first bubble, are generated. In other words, due to the relative arrangement between the rotor magnet 7A and the respective upstream and downstream magnets 15A, a pair of bubbles with different magnetic pressure is generated, in other words a first bubble with greater magnetic pressure and a second bubble with lower magnetic pressure, which are respectively situated upstream and downstream of the rotor magnet 7A, essentially astride of such a magnet. In the aforementioned initial configuration, the relative arrangement of the rotor magnet 7A and of the corresponding upstream and downstream magnets 15A is in any case such that the apparatus 1 is balanced overall. In other words, the rotor 2 and the cam 10 are immobile.

From the aforementioned initial configuration, by activating the motor EM the cam 10 is set in rotation around the rotor axis Z_Z in the direction of rotation indicated by the arrow R in the figures.

Following the rotation of the cam, the cam profile 16 determines the sliding of the upstream magnet 15A towards the rotor magnet 7A so as to increase the magnetic pressure between such magnets. When the magnetic pressure, and therefore the magnetic repulsion force between such magnets, reaches a certain value, the rotor 2 starts to rotate around the rotor axis Z_Z in the direction indicated by the arrow R. Following the rotation of the rotor 2, the rotor magnet 7A takes up a further angular position in which it is once again angularly arranged between two upstream and downstream magnets 15A that are adjacent to one another. In particular, such magnets 15A are those immediately following one another in the direction of rotation R. In other words, the one that was previously the downstream magnet with respect to the rotor magnet 7A, in the new angular position becomes the upstream magnet with respect to the magnet 7A. The operation of the apparatus 1 is at this point repeated as described above so as to allow the cyclical rotation of the rotor magnet 7A, and therefore of the rotor 2, around the rotor axis Z_Z. Such a rotation takes place in the example in a continuous manner, in other words not in clicks.

In other words, when the cam 10 is set in rotation, the cam profile 16 is suitable for cooperating with the cam followers 15 to consecutively bring each magnet 15A closer to the rotor magnet 7A and in this way determine the rotation of the rotor 2 through the effect of the magnetic repulsion between each magnet 15A and the rotor magnet 7A. Regarding this, it should be observed that the rotation of the rotor 2 can occur in a single direction. In other words, by rotating the cam 10 in the opposite direction with respect to the arrow R, the apparatus 1 would not work.

It should also be observed that during the operation of the apparatus 1, the rotor magnet 7A is suitable for consecutively taking up a plurality of angular positions about the rotor axis Z_Z, in each of which the magnet 7A is arranged frontally and is angularly arranged between a different pair of permanent magnets 15A of the aforementioned array of sliding members 15. In particular, each of such pairs of permanent magnets comprises an upstream magnet 15A and a downstream magnet 15A arranged angularly adjacent to one another. More specifically, in each of such angular positions the upstream magnet 15A of the rotor magnet 7A takes up a position relatively more advanced along the respective sliding direction S_m so as to increase the magnetic repulsion force with the respective rotor magnet 7A, whereas the downstream magnet 15A of the rotor magnet 7A takes up a position relatively more set back along the respective sliding direction S_m so as to reduce the magnetic repulsion force with the respective rotor magnet 7A and with the magnet 15A upstream of the magnet 7A.

From another point of view, the sliding of the cam followers 15 is substantially such as to determine a progressive displacement of the aforementioned pair of bubbles with different magnetic pressures so as to determine the rotation of such a pair of bubbles about the rotor axis Z_Z. The displacement of the pair of bubbles determines the rotation of the rotor magnet 7A, and thus of the rotor 2.

As indicated above, what has been previously described above in relation to the rotor magnet 7A is valid in an analogous way also for each of the rotor magnets 7B and 7C.

It should be observed that according to an embodiment, in order to allow optimal and particularly efficient operation of the apparatus 1, in each of the aforementioned angular positions, the radial axis A_r (figure 9) of each rotor magnet 7A, 7B, 7C forms a predetermined angle A3 with the sliding direction S_m of the respective magnet 15A upstream. An operative configuration of the apparatus 1 in which the rotor magnets 7A, 7B, 7C take up one of such angular positions is illustrated for example in figure 9.

At such a predetermined angle A3, there is the maximum magnetic pressure, in other words the maximum repulsion force, between each rotor magnet 7A, 7B, 7C and the respective magnet 15A upstream. Moreover, at such an angle A3 there is the minimum magnetic pressure, in other words the minimum repulsion force, both between each rotor magnet 7A, 7B, 7C and the respective magnet 15A downstream and between the downstream and upstream magnets of each rotor magnet 7A, 7B, 7C. More preferably, at the angle A3, a condition is reached such that the magnetic repulsion force between each rotor magnet 7A, 7B, 7C and the respective magnet 15A upstream reaches the magnetic pressure limit defined by the magnetic field of the two permanent magnets.

Specifically, the predetermined angle A3 is equal to a whole multiple of an angle given by the ratio Am/Np, where Am is the angle between the sliding directions S_m of the upstream and downstream magnets of each rotor magnet 7A, 7B, 7C (in other words the angle A2) and Np is the number of rotor poles. In particular, it should be observed that the angle Am is preferably a whole multiple of the number of poles Np.

Figure 9 schematically represents such a condition described above. In the example, in which Am=9°, Np=3 and the angle A1=120°, the angle A3 is equal, respectively, to 3° in the case of the magnet 7A, to 6° in the case of the magnet 7B and to 9° in the case of the magnet 7C. In other words, as can be observed in figure 9, in the case of the magnet 7C the radial axis A_r and the sliding direction S_m of the magnet downstream of the magnet 7C coincide with each other.

It should be observed that when such a condition is reached the rotation of the rotor 2 is virtually independent from the motor EM. It should also be observed that the angle A3 is in general much important for optimal and particularly efficient operation of the apparatus 1. Indeed, the torque transmitted to the rotor 2 is dependent on such an angle.

It should be observed that during the operation of the apparatus 1, the permanent magnets 15A and the rotor magnets 7A, 7B, 7C are subject to gradual demagnetization.

Indeed, although the rotor magnets 7A, 7B, 7C and the follower magnets 15A are arranged with poles of the same type operatively opposing one another, during the operation of the apparatus 1, through the effect of the relative motion between the magnets 15A and the rotor magnets 7A, 7B, 7C, there are periodic inversions in magnetic polarity in the flux of the magnetic field between the magnets 15A and the rotor magnets 7A, 7B, 7C. In other words, during the operation of the apparatus 1, the follower magnets 15A and the rotor magnets 7A, 7B, 7C magnetically interact with each other as if they were arranged alternately with magnetic poles of the same type (for example S-S) opposing one another and with magnetic poles of different types (for example S-N) opposing one another. These cyclical inversions of the flux of the magnetic field between the follower magnets 15A and the rotor magnets 7A, 7B, 7C over time determines the demagnetization of the magnets 15A and of the magnets 7A, 7B, 7C.

In this specific case, the demagnetization of the magnets 15A and of the magnets 7A, 7B, 7C is in general a function both of the load applied to the apparatus 1 and of the oscillation speed of the magnets 15A along the directions S_m. In particular, the slower the oscillation, the slower the demagnetization. It should be observed that it is important to limit as much as possible the formation of eddy currents. For this reason the whole structure of the apparatus 1 is preferably made from diamagnetic and electrically insulating materials.

Once a certain degree of demagnetization of the magnets 15A and of the magnets 7A, 7B, 7C has been reached the apparatus 1 is no longer able to operate.

In accordance with the embodiment used as an example, the Applicant has observed that in open circuit operation, the electrical generator EG is able to supply, for a limited time period, an electrical power in output that is greater than the power in input supplied to the electric motor EM. This can occur, as discussed above, until, when a certain degree of demagnetization of the permanent magnets has been reached, the apparatus 1 is no longer able to operate. More specifically, experiments carried out by the Applicant have shown that by supplying a power of about 150W in input to the electric motor EM, for example through a battery, it is possible to obtain, for a limited time period, a power in output from the electrical generator equal to about 300W. In particular, in the example the Applicant used 300W light bulbs as the load, electrically connected to the output of the electrical generator EG.

It should be observed that the power surplus in output from the generator EG is extracted from the permanent magnets 15A, 7A, 7B, 7C, which during the operation of the apparatus 1 at least partially demagnetize.

The Applicant has also observed that the mass of the rotor 2 has a significant impact on the efficiency of the apparatus 1.

According to an advantageous embodiment, it should also be observed that the power in output from the electrical generator EG can be in part used to feed the electric motor EM. Therefore, once the apparatus 1 is started up, the motor EM can be disconnected from an external power source, like for example a battery, and the system comprising the apparatus 1, the motor EM and the generator EG is essentially able to feed itself for a limited time period so as to allow so-called "stand alone" operation of such a system.

Advantageously, once the permanent magnets of the apparatus 1 have reached a degree of demagnetization such as to prevent the operation of the apparatus 1, they can be replaced or, more preferably regenerated, to allow the system to be put back into operation. In this sense, the apparatus 1 can be considered essentially like a sort of "battery", or "accumulator", in which the energy is stored in magnetic form.

From another point of view, the assembly formed from the actuation device EM and from the apparatus 1 can be considered overall essentially as a motor.

It should be observed that an apparatus with permanent magnets according to the present description can have multiple applications in different fields. In particular, an apparatus with permanent magnets according to the present description can be used whenever it is necessary to supply a power to a load, for example of the electrical or mechanical type, coupled with the apparatus. For example, the apparatus 1 can be used in the field of land vehicles to supply power to the traction system of a vehicle, for example, and not for limiting purposes, an automobile. Moreover, the apparatus 1 can be used in the field of agriculture to actuate a hydraulic pump coupled, directly or indirectly, with such an apparatus. Furthermore, the apparatus 1 could for example be used in the home to supply electrical energy for a limited time period.

Based on what has been described above, it is therefore possible to understand how an apparatus with permanent magnets according to the present description allows the aforementioned purposes to be accomplished.

It should be observed that the apparatus 1 using entirely mechanical components has a relatively simple, strong and reliable structure.

Moreover, thanks to the possibility of also being used in "stand alone" mode, the apparatus has particularly versatile use.

Without affecting the principle of the invention, the embodiments and the details can be widely varied with respect to what has been described and illustrated purely as a non-limiting example, without for this reason departing from the scope of the invention as defined in the attached claims.

## Claims

1. Apparatus with permanent magnets (1), suitable for being coupled with an actuation device (EM) and with a load to supply power to said load, said apparatus (1) comprising:
- a rotor (2) adapted to be coupled with said load and adapted to be rotatably supported to rotate about a rotor axis (Z_Z);
- at least one magnetic rotor element (6A), or magnetic rotor pole (6A), which is provided on the rotor and that comprises a permanent rotor magnet (7A) rotating rigid with the rotor (2);
- a transmission member (10) which is mountable to rotate independently with respect to the rotor (2) and which is adapted to be actuated through said actuation device (EM) to rotate about a transmission member axis (Y_Y); and
- an annular array of sliding members (15) distributed around the rotor axis (Z_Z), wherein each sliding member (15) comprises a sliding member permanent magnet (15A) and is mounted independently slidable along a respective sliding direction (S_m) transversal to the rotor axis (Z_Z) to carry out an alternate motion in the sliding direction (S_m), said sliding member magnets (15A) and said rotor magnet (7A) being mutually arranged so as to have magnetic poles of the same type (S) operatively opposing one another to generate repulsive magnetic forces between the sliding member permanent magnets (15A) and the permanent rotor magnet (7A);
in which the transmission member (10) comprises a transmission portion (16) which is adapted to cooperate with said sliding members (15) to consecutively bring each sliding member permanent magnet (15A) close to the permanent rotor magnet (7A) and in this way determine the rotation of the rotor (2) by the effect of the magnetic repulsion between each sliding member permanent magnet (15A) and said rotor magnet (7A),
wherein the sliding members (15) are adapted to cooperate with the transmission portion (16) so as to transmit forces (F_t, F_r) to the transmission portion (16), and
wherein the arrangement of the sliding members (15) and the transmission portion (16) are designed so that said forces (F_t, F_r) transmitted by the sliding members are adapted to at least partially compensate one another to reduce the mechanical moment transmitted by such forces (F_t, F_r) to the transmission member (10).

2. Apparatus with permanent magnets (1) according to claim 1, wherein the arrangement of the sliding members (15) and the transmission portion (16) are designed so that said resulting moment is equal to zero or substantially equal to zero.

3. Apparatus with permanent magnets (1) according to claim 1 or 2, wherein said annular array comprises at least ten sliding members (15).

4. Apparatus with permanent magnets (1) according to any one of the previous claims, wherein the sliding directions (S_m) of said sliding members (15) are fixed sliding directions with respect to a fixed external reference and wherein the angle (A2) between the sliding directions (S_m) of each pair of sliding members (15) angularly adjacent to one another is the same.

5. Apparatus with permanent magnets (1) according to claim 4, comprising a plurality of rotor poles (6A, 6B, 6C), wherein each rotor pole (6A, 6B, 6C) comprises a respective permanent rotor magnet (7A, 7B, 7C) and wherein such rotor magnets (7A, 7B, 7C) are uniformly angularly spaced apart around the rotor axis (Z_Z).

6. Apparatus with permanent magnets (1) according to claim 5, wherein said angle (A2) between the sliding directions (S_m) of each pair of adjacent sliding members is a whole multiple of the number (Np) of rotor poles (6A, 6B, 6C).

7. Apparatus with permanent magnets (1) according to claim 5 or 6, wherein each permanent rotor magnet (7A, 7B, 7C) is adapted to take up a plurality of angular positions around the rotor axis (Z_Z) and wherein in each of said angular positions each of said rotor magnets (7A, 7B, 7C) is arranged frontally and angularly interposed between a different pair of permanent magnets of said array of sliding members (15), each of said pairs of permanent magnets comprising a first and a second sliding member permanent magnet (15A, 15A) arranged angularly adjacent to one another, and wherein in each of said angular positions
said first sliding member magnet (15A) takes up a position relatively advanced along the respective sliding direction (S_m) so as to increase the magnetic repulsion force with said rotor magnet (7A, 7B, 7C), and
said second sliding member magnet (15A) takes up a position relatively set back along the respective sliding direction (S_m) so as to reduce the magnetic repulsion force with said rotor magnet (7A, 7B, 7C) and with said first sliding member magnet (15A).

8. Apparatus with permanent magnets (1) according to claim 7, wherein each rotor magnet (7A, 7B, 7C) comprises a radial magnet axis (A_r) and wherein in each of said angular positions the radial axis (A_r) of each rotor magnet (7A, 7B, 7C) forms a predetermined angle (A3) with the sliding direction (S_m) of said first magnet (15A), at said predetermined angle (A3) occurring the maximum repulsion force between the first magnet (15A) and the respective rotor magnet (7A, 7B, 7C) and the minimum repulsion force both between the second magnet (15A) and the respective rotor magnet (7A, 7B, 7C) and between the second magnet (15A) and the first magnet (15A), said predetermined angle (A3) being equal to or a whole multiple of an angle given by the ratio Am/Np, Am being said angle (A2) between the sliding directions (S_m) of the first and of the second magnet (15A, 15A) and Np being the number of rotor poles (6A, 6B, 6C), Am being a whole multiple of Np.

9. Apparatus with permanent magnets (1) according to any one of the previous claims, wherein said sliding members (15) each comprise a support arm (15B) to support a respective sliding member permanent magnet (15A) and wherein said apparatus (1) comprises guide elements (17) adapted to cooperate with the support arms (15B) to guide the sliding of the sliding members (15) along the sliding directions (S_m), each support arm (15B) having an arm end portion (15B') to which the sliding member magnet (15A) is fixed and an opposite arm end portion (15B*''*) that is constrained in a sliding manner to said transmission portion (16), the support arms (15B) being straight arms of the same length to support said sliding member magnets (15A) a same distance away from the transmission portion (16), the distances from the transmission portion (16) being measured along the sliding directions (S_m).

10. Apparatus with permanent magnets (1) according to any one of the previous claims, wherein said transmission portion (16) has a polylobed profile, each lobe (22) of the profile comprising a lobe end portion (22A) with greater bending radius (22A) and an opposite lobe end portion (22B) with smaller bending radius, the portion with greater bending radius (22A) of each lobe (22) being joined to the portion with smaller bending radius (22B) of the adjacent lobe (22).

11. Apparatus with permanent magnets (1) according to any one of the previous claims, wherein the transmission member (10) is a cam mounted coaxial to the rotor (2) to rotate about the rotor axis (Z_Z), and wherein the transmission portion (16) comprises an annular cam profile (16) extending radially outwards with respect to the rotor (2).

12. Vehicle comprising an apparatus with permanent magnets (1) as defined in any one of the previous claims.
